# FASCICULE DE BREVET EUROPEEN

(11) **EP 3 315 368 B1**
(45) Date de publication et mention de la délivrance du brevet: **27.05.2020**
(21) Numéro de dépôt: 17197587.3
(22) Date de dépôt: 20.10.2017
(51) Int. Cl.: B60S 1/38

(54) **ENSEMBLE POUR VEHICULE AUTOMOBILE COMPRENANT UN EQUIPEMENT AUTOMOBILE ET UN ELEMENT PIEZO-ELECTRIQUE**
EINHEIT FÜR KRAFTFAHRZEUG, DIE EINE KRAFTFAHRZEUGAUSRÜSTUNG UND EIN PIEZOELEKTRISCHES ELEMENT UMFASST
ASSEMBLY FOR MOTOR VEHICLE COMPRISING A MOTOR VEHICLE DEVICE AND A PIEZOELECTRIC ELEMENT

(30) Priorité: 25.10.2016 FR 1660335
(43) Date de publication de la demande: 02.05.2018
(73) Titulaire: Valeo Systèmes d'Essuyage, 78322 Le Mesnil Saint Denis (FR)
(72) Inventeur: JARASSON, Jean-Michel, 78322 LE MESNIL SAINT DENIS (FR); IZABEL, Vincent, 78322 LE MESNIL SAINT DENIS (FR); CAILLOT, Gérald, 78322 LE MESNIL SAINT DENIS (FR)
(74) Mandataire: Valeo Systèmes d'Essuyage

(56) Documents cités:
- EP-A1- 1 600 428
- WO-A1-2009/118286
- DE-A1- 19 823 431
- DE-A1-102012 209 983
- GB-A- 2 106 966
- JP-A- 2015 189 278
- KR-A- 20020 087 807

## Description

### DOMAINE TECHNIQUE DE L'INVENTION

L'invention concerne un ensemble pour véhicule automobile comprenant un équipement automobile et un élément piézo-électrique.

### ARRIERE PLAN TECHNIQUE DE L'INVENTION

Il est connu d'utiliser les propriétés piézo-électriques de certains matériaux pour alimenter en énergie électrique des équipements automobiles tels que des balais d'essuie-glace de véhicule automobile ou des équipements de ces balais d'essuie-glace appartenant à un dispositif d'essuyage d'une vitre du véhicule automobile.

Pour ce faire, on connaît par exemple l'utilisation de blocs piézo-électriques qui sont agencés sur la lame d'essuyage d'un balai d'essuie-glace et qui sont conçus pour se déformer, notamment lors des changements d'orientation de la lame d'essuyage qui interviennent à chaque changement de direction de balayage dans le mouvement de va-et-vient du balai d'essuie-glace. L'électricité produite par la déformation des blocs piézo-électriques est alors utilisée pour alimenter en courant un équipement du véhicule automobile qui est ici constitué par le balai d'essuie-glace, pour alimenter une résistance chauffante.

Le document KR 2002 0087807 A montre un ensemble selon le préambule de la première revendication.

Le choix de l'emplacement et de l'implantation de tels blocs piézo-électriques est cependant limité. Il faut en effet agencer les blocs piézo-électriques à un endroit où ils peuvent être soumis à un champ de pression suffisamment intense pour que les blocs soient déformés pour produire une énergie électrique suffisante, sans toutefois nuire au bon fonctionnement de l'équipement, et par exemple à la qualité de l'essuyage assuré par la lame d'essuyage.

En outre, il faut de préférence agencer les blocs piézo-électriques suffisamment près de l'équipement automobile à alimenter en énergie électrique pour ne pas augmenter inutilement la quantité de connexions et de liaisons filaires.

Il existe donc un besoin de pouvoir bénéficier de plus de souplesse dans l'alimentation en énergie électrique par des éléments dits "piézo-électriques". L'un des objectifs de l'invention est de répondre à ce besoin.

### BREF RESUME DE L'INVENTION

Dans ce but, l'invention propose un ensemble pour véhicule automobile comprenant un équipement du véhicule automobile et un élément piézo-électrique conçu pour se déformer sous l'effet d'un flux d'air de manière à produire un courant électrique utilisé pour le fonctionnement de l'équipement du véhicule automobile.

Selon différents aspects de l'invention, qui pourront être pris ensemble ou séparément :
- l'élément piézo-électrique est un film piézo-électrique,
- le film piézo-électrique recouvre une partie d'une surface du véhicule automobile
- la surface automobile est exposée à un flux d'air
- le flux d'air est créé lors du déplacement du véhicule automobile,
- l'ensemble comprend en outre un module de chauffage
- le module de chauffage est alimenté en courant électrique par l'élément piézo-électrique,
- le module de chauffage est conçu pour dégivrer au moins une partie de l'équipement du véhicule automobile,
- le module de chauffage est un film chauffant,
- l'équipement automobile est un module d'éclairage, un capteur optique, un dispositif d'essuyage ou une vitre,
- l'ensemble comprend en outre un dispositif d'accumulation d'énergie électrique, notamment un condensateur, un super-condensateur ou une batterie,
- le dispositif d'accumulation d'énergie est conçu pour alimenter en courant électrique l'équipement du véhicule automobile,
- le dispositif d'accumulation d'énergie électrique est conçu pour être alimenté en courant électrique au moins par l'élément piézo-électrique,
- l'ensemble comprend en outre un déflecteur aérodynamique qui, directement ou indirectement, déforme l'élément piézo-électrique lorsque le déflecteur aérodynamique est soumis au flux d'air,
- l'élément piézo-électrique est un film piézo-électrique,
- le film piézo-électrique est collé sur le déflecteur aérodynamique.

### BREVE DESCRIPTION DES FIGURES

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins annexés dans lesquels :
- La figure 1 est une vue en perspective de la partie avant d'un véhicule automobile sur laquelle a été représenté un champ de pression engendré par le déplacement du véhicule automobile.
- La figure 2 est une vue en section transversale d'une partie d'un dispositif d'essuyage muni d'un élément piézo-électrique agencé selon l'invention.
- La figure 2a est une vue éclatée, en perspective, d'une partie du dispositif d'essuyage illustré à la figure 2.

La figure 3 est une vue de face de la partie arrière d'un véhicule automobile muni d'un dispositif d'essuyage selon l'invention. L'invention concerne un ensemble pour véhicule automobile comprenant un équipement automobile et un élément piézo-électrique. L'élément piézo-électrique est conçu pour se déformer sous l'effet d'un flux d'air de manière à produire un courant électrique utilisé pour le fonctionnement de l'équipement du véhicule automobile.

Dans la suite, la description, purement illustrative et non limitative, est organisée en différentes parties débutant par un titre. Chacune de ces parties décrit un aspect et/ou un mode de réalisation possible de l'invention.

### EQUIPEMENT AUTOMOBILE

Sans que l'énumération qui suit soit limitative, l'équipement automobile peut être un capteur optique, notamment une caméra, une vitre telle qu'un pare-brise, une vitre arrière ou une vitre de phare, ou un dispositif d'essuyage d'une surface vitrée du véhicule automobile.

### FLUX D'AIR

Un élément piézo-électrique 2 est conçu pour être déformé sous l'effet d'un flux d'air. L'élément piézo-électrique 2 est conçu pour être déformé directement par un flux d'air. En variante, l'élément piézo-électrique 2 est conçu pour être déformé indirectement par un flux d'air.

Le flux d'air est par exemple provoqué par un déplacement du véhicule automobile. Dans ce cas, le flux d'air correspond alors à un écoulement d'air autour du véhicule automobile. En variante, le flux d'air peut être créé par le vent, auquel la voiture, mobile ou immobile, est exposée.

Lors du déplacement du véhicule selon une direction de déplacement, une direction générale d'écoulement du flux d'air est sensiblement confondue avec la direction de déplacement du véhicule automobile.

L'élément piézo-électrique 2 est avantageusement agencé sur le véhicule automobile dans une zone soumise au flux d'air créé lors du déplacement du véhicule. Par exemple, l'élément piézo-électrique 2 est agencé sur une portion de la surface ou enveloppe extérieure du véhicule automobile.

### SYSTEME DE VENTILATION

Un flux d'air peut être créé par un système de ventilation, par un système de refroidissement ou encore par un système de chauffage du véhicule automobile. Dans ce cas, l'élément piézo-électrique 2 est par exemple agencé à l'intérieur d'un circuit de ventilation du véhicule automobile, notamment à l'intérieur du véhicule automobile.

### ELEMENT PIEZO-ELECTRIQUE

L'élément piézo-électrique 2 est un élément comprenant au moins un matériau piézo-électrique. Le matériau piézo-électrique est conçu pour générer un courant électrique lorsqu'il est soumis à un champ de pression mécanique.

Ainsi, l'élément piézo-électrique 2 est conçu de manière à produire un courant électrique lorsqu'il est soumis à un champ de pression mécanique et/ou lorsque l'élément piézo-électrique 2 est déformé. Le courant électrique produit par l'élément piézo-électrique dépend du champ de pression mécanique et/ou de la déformation qu'il subit. Dès lors, lorsque le champ de pression mécanique et/ou la déformation varie, le courant électrique produit par l'élément piézo-électrique varie aussi.

### EMPLACEMENT DE L'ELEMENT PIEZO-ELECTRIQUE

L'élément piézo-électrique 2 peut être agencé à proximité immédiate de l'équipement automobile. L'élément piézo-électrique 2 peut aussi être agencé directement sur l'équipement automobile.

De tels agencements permettent de limiter d'éventuels câblages ou autres connexions électriques qui relient l'équipement automobile à son alimentation.

L'élément piézo-électrique permet par exemple à l'équipement automobile de bénéficier d'une alimentation autonome en électricité.

En variante, le courant produit par l'élément piézo-électrique fait fonction de signal électrique variable qui permet notamment de transmettre une information à l'équipement automobile, par exemple représentative du fonctionnement de l'équipement ou du véhicule automobile.

Le courant produit par l'élément piézo-électrique n'est alors en principe pas utilisé pour alimenter l'équipement automobile en énergie électrique.

Dans ce cas, l'élément piézo-électrique n'est pas utilisé comme un générateur de courant d'alimentation en énergie électrique, mais comme un générateur de signaux électrique dont l'analyse permet par exemple de commander l'équipement automobile ou un module de commande.

### FILM PIEZO-ELECTRIQUE

L'élément piézo-électrique 2 est par exemple un film piézo-électrique 2 qui prend la forme d'une bandelette.

Le film piézo-électrique 2 est par exemple un film ou une bande polymère. Le film piézo-électrique 2 est par exemple un film souple et/ou déformable.

Le film piézo-électrique 2 est par exemple un film réalisé à partir d'un matériau plastique à effet piézo-électrique. Le film piézo-électrique 2 est réalisé à partir d'une matière plastique capable de transformer en électricité une pression mécanique et/ou une déformation à laquelle elle est soumise.

Le film piézo-électrique 2 est conçu de manière à produire de l'électricité lorsqu'il est soumis à un champ de pression mécanique. Le film piézo-électrique 2 est conçu pour produire un courant électrique lorsqu'il se déforme.

### BLOC PIEZO-ELECTRIQUE

En variante, l'élément piézo-électrique 2 présente une forme épaisse, notamment une forme de bloc piézo-électrique 2.

Par exemple, et comme cela sera décrit par la suite, le bloc piézo-électrique 2 est conçu pour être déformé par un déflecteur aérodynamique 19.

### SURFACE POUR L'AGENCEMENT DE L'ELEMENT PIEZO-ELECTRIQUE

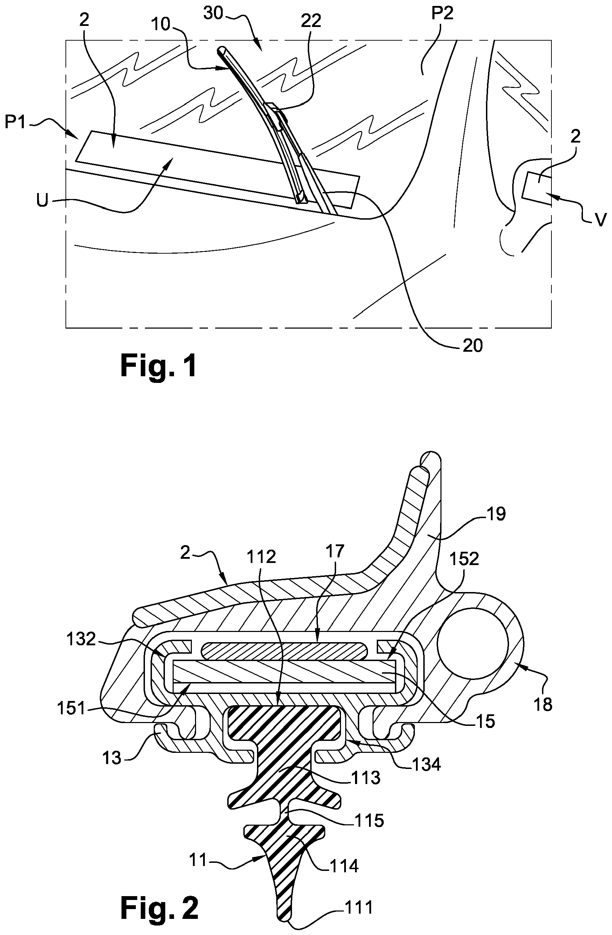

Comme illustré à la figure 1, l'élément piézo-électrique 2 est par exemple agencé sur une portion (U, V) de surface du véhicule automobile qui offre une résistance aérodynamique importante lors du déplacement du véhicule automobile, c'est à dire notamment une portion de surface qui est soumise à un gradient de pression aérodynamique important.

Par exemple, l'élément piézo-électrique 2 peut être agencé sur une surface fortement inclinée par rapport à la direction d'écoulement du flux d'air, notamment une surface sensiblement orthogonale à la direction d'écoulement du flux d'air.

L'élément piézo-électrique 2 peut ainsi être agencé au niveau d'une extrémité avant ou arrière du véhicule automobile. En particulier ici, l'élément piézo-électrique est un film piézo-électrique 2. Il est agencé sur une portion (U) d'une surface extérieure d'un pare-brise 30 du véhicule automobile. En outre, un deuxième élément piézo-électrique 2 est agencé sur une surface extérieure (V) d'un rétroviseur automobile. En variante non illustrée, l'élément piézo-électrique 2 est agencé sur une surface extérieure d'un phare du véhicule automobile.

### DISPOSITIF D'ESSUYAGE

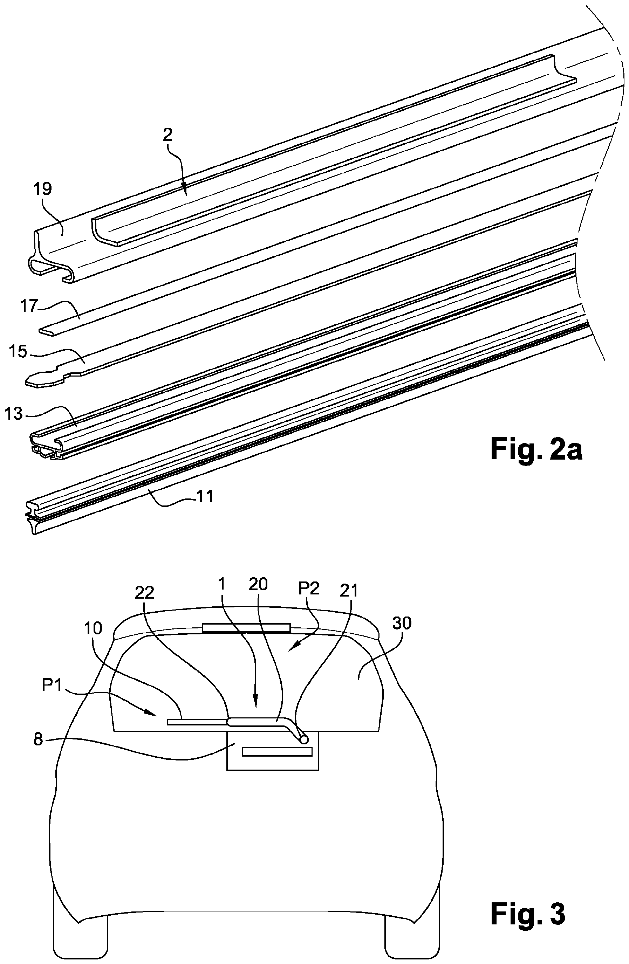

Dans le mode de réalisation illustré à la figure 2, l'équipement automobile est un dispositif d'essuyage 1.

Le dispositif d'essuyage 1 est un dispositif conçu pour améliorer la visibilité du conducteur du véhicule automobile à travers la vitre 30 du véhicule automobile. La vitre 30 est par exemple un pare-brise avant ou une vitre arrière du véhicule automobile.

### BRAS D'ESSUIE-GLACE

Le dispositif d'essuyage 1 comporte un bras d'essuie-glace ou bras d'entraînement 20 et un moteur 8 d'entraînement. Le moteur 8 est conçu pour entraîner le bras 20 dans un mouvement angulaire de va-et vient.

Le bras 20 entraîne le balai d'essuyage 10 dans le mouvement de va-et-vient. Le balai d'essuie-glace 10 est ici monté au bras 20 dans un prolongement du bras 20. Le balai d'essuie-glace 10 est conçu pour évoluer ici entre une position de repos P1 et une position de butée P2, de l'une à l'autre.

Le bras 20 comprend une extrémité proximale 21 et une extrémité distale 22. Il s'étend longitudinalement de l'une des extrémités 21, 22 à l'autre 21, 22. Le bras 20 est conçu pour être assemblé au niveau de son extrémité proximale 21 au moteur 8 du dispositif d'essuyage 1. Le bras 20 est par ailleurs conçu pour être assemblé au niveau de son extrémité distale 22 au balai d'essuie-glace 10 de manière à mettre en mouvement celui-ci.

Comme cela sera précisé par la suite, le balai d'essuie-glace 10 est conçu pour être en contact avec la vitre 30 du véhicule automobile. En particulier, le balai d'essuie-glace 10 est conçu pour être en contact avec une surface extérieure de la vitre à essuyer 30.

### BALAI D'ESSUIE-GLACE

Comme illustré aux figures 2 et 2a, le balai d'essuie-glace 10 comprend ici une lame d'essuyage 11, une armature 13 et une vertèbre 15. L'armature 13 peut aussi être désignée par le terme anglais « *holder* » et la vertèbre 15 par le terme anglais « *spline* ».

### ARMATURE

Comme illustré notamment à la figure 2, l'armature 13 comprend une première extrémité et une deuxième extrémité longitudinales. L'armature 13 s'étend longitudinalement selon une direction principale d'extension longitudinale de sa première à sa deuxième extrémité. L'armature 13 présente de plus une hauteur, mesurée orthogonalement à la direction principale d'extension longitudinale de l'armature 13.

L'armature 13 comprend une première cavité longitudinale 132, dite cavité supérieure, et une deuxième cavité longitudinale 134, dite cavité inférieure. Les deux cavités 132, 134 s'étendent ici longitudinalement de la première à la deuxième extrémité de l'armature 13. Les cavités supérieure 132 et inférieure 134 sont conçues pour servir de logement respectivement à la vertèbre 15 et à une partie de la lame d'essuyage 11. Ainsi, l'armature 13 fait fonction de support de la vertèbre 15 ainsi que de la lame d'essuyage 11.

La vertèbre 15 est logée dans la cavité supérieure 132 de l'armature 13. La lame d'essuyage 11 est en partie logée à l'intérieur de la cavité inférieure 134 de l'armature 13.

L'armature 13 est conçue de sorte que, une fois le dispositif d'essuyage 1 monté sur le véhicule automobile, l'armature 13 s'étend dans le sens de la hauteur dans une direction sensiblement orthogonale à la surface extérieure de la vitre à essuyer.

### LAME D'ESSUYAGE

La lame d'essuyage est conçue pour essuyer une partie ou zone de la surface extérieure de la vitre à essuyer lorsque le balai d'essuie-glace 10 se déplace selon un mouvement de va-et-vient.

La lame d'essuyage 11 est essentiellement conçue pour évacuer des liquides présents sur la surface extérieure et/ou pour nettoyer celle-ci. Le mouvement de va-et-vient du balai d'essuie-glace 10 permet en outre de débarrasser la surface extérieure de la vitre à essuyer d'éventuelles saletés.

La lame d'essuyage 11 est conçue pour être en contact direct avec la surface extérieure de la vitre à essuyer, par exemple du pare-brise 30 du véhicule automobile. La lame d'essuyage 11 est par exemple réalisée en un matériau souple tel par exemple du caoutchouc naturel ou synthétique. Le contact entre le bord libre de la lame d'essuyage 11 et la surface extérieure de la vitre à essuyer définit une zone de contact entre la lame d'essuyage 11 et la surface extérieure de la vitre à essuyer. La zone de contact entre la surface extérieure de la vitre à essuyer et la lame d'essuyage est sensiblement linéaire et correspond à la zone de contact entre le bord libre de la lame d'essuyage et la surface extérieure de la vitre à essuyer. La zone de contact est de préférence dépourvue de discontinuités le long du bord libre de la lame d'essuyage de manière à permettre un essuyage homogène de la zone d'essuyage, notamment dans sa portion correspondant au champ de vision principal du conducteur lorsque la surface extérieure de la vitre à essuyer est par exemple le pare-brise 30.

Le balai d'essuie-glace 10 est conçu de sorte que la lame d'essuyage 11 se déforme élastiquement lors du déplacement du balai d'essuie-glace 10 le long de la surface extérieure de la vitre à essuyer. Cette déformation permet à la lame d'essuyage 11 d'épouser localement la courbure ou galbe de la surface extérieure de la vitre à essuyer. Cette déformation de la lame d'essuyage 11 permet notamment d'obtenir que la zone de contact entre la lame d'essuyage 11 et la surface extérieure de la vitre à essuyer soit continue comme évoqué plus haut.

La lame d'essuyage 11 comprend ici une première extrémité et une deuxième extrémité longitudinales. La lame d'essuyage 11 s'étend longitudinalement selon une direction principale d'extension longitudinale entre sa première et sa deuxième extrémité, de l'une à l'autre. La lame d'essuyage 11 présente ici une hauteur, mesurée orthogonalement à la direction principale d'extension longitudinale de la lame d'essuyage 11. La lame d'essuyage 11 s'étend dans le sens de la hauteur entre son bord libre d'extrémité inférieure 111 et une extrémité supérieure 112 de la lame d'essuyage 11.

Comme illustré en particulier à la figure 2, la lame d'essuyage 11 comprend une partie supérieure 113 de fixation ou de montage aussi appelée talon, et une partie inférieure 114 d'essuyage, qui sont solidaires l'une de l'autre. Les parties supérieure 113 et inférieure sont reliées l'une à l'autre par une zone intermédiaire formant charnière 115 qui s'étend longitudinalement de la première extrémité à la deuxième extrémité de la lame d'essuyage 11. La zone charnière 115 permet une déformation et un changement d'orientation de la lame d'essuyage 11 de sorte que sa partie inférieure 114 peut pivoter par rapport à la partie supérieure 113 de la lame d'essuyage 11, autour de la zone charnière 115 qui constitue l'axe longitudinal de pivotement de la partie inférieure 114. Ce mouvement de pivotement angulaire de la partie inférieure 114 par rapport à la partie supérieure 113 se produit notamment lors d'un changement de direction dans le mouvement de va et vient du balai d'essuie-glace 10 le long de la surface extérieure de la vitre à essuyer.

La partie inférieure 114 de la lame d'essuyage est conçue de manière à être en contact avec la surface extérieure de la vitre à essuyer par son bord libre d'extrémité inférieure 111. La partie supérieure 113 de la lame d'essuyage 11 est conçue pour être montée, au moins partiellement, à l'intérieur de la cavité inférieure 134 de l'armature 13.

### VERTEBRE

La vertèbre 15 du balai d'essuie-glace 10 permet de conférer à la lame d'essuyage 11 une rigidité suffisante pour la maintenir plaquée contre la surface extérieure de la vitre à essuyer.

La vertèbre 15 du balai d'essuie-glace 10 est conçue pour maintenir une pression de contact nécessaire et suffisante entre le bord libre d'extrémité inférieure 111 et la surface extérieure de la vitre à essuyer 30. La vertèbre 15 permet d'assurer un essuyage efficace en permettant ainsi à la zone de contact entre la lame d'essuyage 11 la surface extérieure de la vitre à essuyer 30 d'être et de rester continue lors du déplacement du balai d'essuie-glace 10 le long de la surface extérieure de la vitre.

La vertèbre 15 est ici une bande de matière. Elle comprend une première extrémité et une deuxième extrémité longitudinales et s'étend longitudinalement selon une direction principale d'extension longitudinale entre sa première et sa deuxième extrémité. La vertèbre 15 présente une hauteur, dite aussi épaisseur, mesurée perpendiculairement à sa direction principale d'extension longitudinale. Une fois les différents composants du balai d'essuie-glace assemblés, la vertèbre 15 est agencée dans l'armature de sorte que la direction de l'épaisseur de la vertèbre 15 soit sensiblement orthogonale à la surface extérieure de la vitre à essuyer.

La vertèbre 15 comprend une face plane supérieure 152 et une face plane inférieure 151. La face inférieure 151 et la face supérieure 152 s'étendent parallèlement l'une à l'autre et délimitent l'épaisseur de la vertèbre 15.

L'armature 13, la vertèbre 15 et la lame d'essuyage 11 s'étendent longitudinalement sensiblement parallèlement les unes aux autres.

Comme illustré à la figure 2, le balai d'essuie-glace 10 peut en outre comprendre un conduit de distribution 18 conçu pour permettre la projection sur la vitre 30 d'un liquide, notamment un liquide de nettoyage, de rinçage ou de dégivrage. Le conduit de distribution 18 s'étend par exemple longitudinalement selon la direction principale d'extension longitudinale du balai d'essuie-glace 10. Le conduit de distribution 18 est par exemple muni d'orifices de projection, non représentés sur les figures. Les orifices de projection peuvent être régulièrement espacés le long du conduit de distribution 18. Les orifices de projection sont conçus pour permettre la projection du liquide depuis l'intérieur du conduit de distribution 18 vers la vitre 30.

Dans une variante non illustrée, le balai d'essuie-glace comprend par exemple deux conduits de distribution. Les conduits de distribution peuvent alors être agencés sensiblement de part et d'autre de la lame d'essuyage.

### MODULE DE CHAUFFAGE

L'ensemble pour véhicule automobile peut comporter un module de chauffage 17.

Le module de chauffage 17 est conçu pour augmenter la température d'une partie du véhicule automobile, notamment pour augmenter la température d'un équipement du véhicule automobile par exemple pour dégivrer tout ou partie de cet équipement.

Le module de chauffage 17 peut également être conçu pour provoquer l'évaporation d'un liquide présent sur l'équipement automobile. Par exemple, le module de chauffage peut être conçu pour provoquer l'évaporation d'un liquide de nettoyage distribué sur une surface de l'équipement du véhicule automobile. Le module de chauffage 17 peut encore être conçu pour provoquer une fonte de la neige ou de la glace présente sur l'équipement automobile.

En particulier, le module de chauffage 17 peut être conçu pour chauffer le balai d'essuie-glace 10. Le chauffage du balai d'essuie-glace 10 par le module de chauffage 17 permet par exemple de faire fondre de la neige ou de la glace accumulée sur et autour du balai d'essuie-glace 10 et empêchant une mise en mouvement du balai d'essuie-glace 10. Autrement dit, de cette manière, le module de chauffage 17 facilite la mise en mouvement du balai d'essuie-glace 10.

Il est à noter que la neige et/ou la glace peuvent parfois obstruer les orifices de projection du balai d'essuie-glace 10. Le module de chauffage 17 peut être conçu pour chauffer le balai d'essuie-glace 10 de manière à faire fondre la neige ou la glace présente dans lesdits orifices. Le module de chauffage 17 permet ainsi une désobstruction desdits orifices de projection et la distribution du liquide de nettoyage ou de dégivrage sur la vitre 30. Autrement dit, le module de chauffage 17 peut être conçu pour permettre un dégel des orifices de projection.

Le module de chauffage 17 est ici conçu pour être alimenté en courant électrique par l'élément piézo-électrique 2.

Le module de chauffage 17 est par exemple un fil chauffant résistif.

En variante, le module de chauffage 17 peut être un film chauffant 17. Le film chauffant 17 peut par exemple être collé directement sur une surface de l'équipement automobile. Le film chauffant 17 peut être transparent, par exemple pour être agencé sur une surface extérieure d'une vitre ou d'un objectif d'une caméra.

Comme illustré à la figure 2, le dispositif d'essuyage peut être muni d'un module de chauffage 17. Le module de chauffage 17 est conçu pour être alimenté en énergie électrique par le film piézo-électrique 2. Le module de chauffage 17 est ici un film chauffant résistif 17.

Le film chauffant 17 est conçu pour être monté sur ou à l'intérieur du balai d'essuie-glace 10. Le film chauffant 17 est par exemple agencé à l'intérieur de l'une des deux cavités inférieure 134 et supérieure 132 de l'armature 13 du balai d'essuie-glace 10. Le film chauffant 17 est ici conçu pour être agencé à l'intérieur de la cavité supérieure 132, sur et en contact avec la face supérieure 152 de la vertèbre 15.

Le film chauffant 17 est par exemple une fine bande de matière qui s'étend longitudinalement selon une direction longitudinale d'extension de la première extrémité à la deuxième extrémité du balai d'essuie-glace 10. Le film chauffant 17 se comporte comme une résistance électrique de chauffage pour produire de la chaleur lorsqu'il est traversé par le courant électrique produit par le film piézo-électrique 2.

### DISPOSITIF D'ACCUMULATION D'ENERGIE ET MODULE DE COMMANDE

L'ensemble pour véhicule automobile peut en outre comprendre un dispositif d'accumulation d'énergie électrique. Le dispositif d'accumulation d'énergie électrique est conçu pour permettre un stockage de l'énergie électrique produite par l'élément piézo-électrique 2. Le dispositif d'accumulation d'énergie électrique est par exemple un condensateur, un super-condensateur, une pile électrique ou une batterie d'accumulateurs. Avantageusement, le dispositif d'accumulation d'énergie électrique permet de ne pas avoir à utiliser instantanément l'énergie électrique produite par l'élément piézo-électrique 2 lorsque cela n'est pas nécessaire et/ou lorsque cette énergie n'est pas immédiatement disponible, par exemple lorsque le véhicule et l'équipement sont à l'arrêt.

Afin de gérer l'utilisation de l'énergie électrique stockée par le dispositif d'accumulation, l'ensemble comprend un module de commande. Le module de commande est ici relié et/ou connecté au dispositif d'accumulation d'énergie électrique et est conçu de manière à piloter celui-ci.

Le module de commande est par exemple conçu de manière à déclencher l'alimentation en énergie électrique du module de chauffage 17 par le dispositif d'accumulation lors du démarrage du véhicule automobile et/ou en cas de risque de formation de givre. Le module de commande permet ainsi d'optimiser l'utilisation de l'énergie électrique produite par l'élément piézo-électrique 2.

### DEFLECTEUR AERODYNAMIQUE

L'ensemble pour véhicule automobile comprend par exemple un déflecteur aérodynamique 19. Le déflecteur aérodynamique 19 est conçu et agencé de manière à déformer l'élément piézo-électrique 2 lorsque le déflecteur aérodynamique 19 est soumis à un flux d'air. Notamment, le déflecteur aérodynamique 19 est conçu pour créer un champ de pression mécanique sur l'élément piézo-électrique 2. L'élément piézo-électrique 2 n'est pas ici conçu pour être nécessairement déformé directement par le flux d'air.

Ici, le flux d'air produit un champ de pression mécanique sur le déflecteur aérodynamique 19. Le champ de pression mécanique provoque alors un déplacement et/ou une déformation du déflecteur aérodynamique 19. Le déplacement et/ou la déformation du déflecteur aérodynamique provoque alors la création d'un champ de pression mécanique sur l'élément piézo-électrique 2 et/ou une déformation de celui-ci.

### BLOC ET DEFLECTEUR AERODYNAMIQUE

L'élément piézo-électrique 2 est par exemple un bloc de matériau piézo-électrique, qu'on appellera par la suite bloc piézo-électrique 2. Le bloc piézo-électrique 2 est par exemple agencé de manière à être déformé par le déplacement du déflecteur aérodynamique 19 lorsque celui-ci est soumis au flux d'air.

Le déflecteur aérodynamique 19 est agencé sur ou dans le véhicule automobile de sorte qu'un flux d'air provoque un déplacement et/ou une déformation du déflecteur aérodynamique 19. Le bloc piézo-électrique 2 est agencé de sorte que la déformation et/ou le déplacement du déflecteur aérodynamique 19 produit alors un champ de pression mécanique sur le bloc piézo-électrique 2. Ici, le bloc piézo-électrique 2 est agencé de manière à être déformé par le déflecteur aérodynamique 19 pour provoquer la production d'un courant électrique.

Le déflecteur aérodynamique 19 est par exemple un volet mobile. Il peut être agencé sur le véhicule automobile, à l'extérieur de celui-ci. Le déflecteur aérodynamique 19 est par exemple relié à une surface extérieure du véhicule automobile par l'intermédiaire de moyens formant charnière. La charnière permet le pivotement et/ou la déformation élastique du déflecteur aérodynamique 19.

Le bloc piézo-électrique 2 peut être agencé entre le déflecteur aérodynamique 19 et une partie fixe du véhicule automobile. La partie fixe du véhicule automobile est par exemple un élément de la carrosserie ou toute autre partie du véhicule, et notamment qui n'est ni déformée ni déplacée par le flux d'air. Grâce à un tel agencement, le bloc piézo-électrique 2 est par exemple apte à être comprimé et/ou compressé entre le déflecteur aérodynamique 19 et la partie fixe du véhicule automobile.

### FILM ET DEFLECTEUR AERODYNAMIQUE

L'élément piézo-électrique 2 est un film piézo-électrique 2 conçu pour être fixé, par exemple par collage, sur une partie souple et/ou déformable du déflecteur aérodynamique 19. Le déflecteur aérodynamique 19 est ici issu au moins partiellement d'un matériau déformable et/ou souple et est conçu pour être déformé par un flux d'air. Ici, l'élément piézo-électrique 2 est conçu pour se déformer avec le déflecteur aérodynamique 19. La déformation du film piézo-électrique 2 provoque la génération d'un courant électrique.

### DEFLECTEUR DU BALAI D'ESSUIE-GLACE

Comme illustré à la figure 2, le déflecteur aérodynamique 19 peut être agencé sur le balai d'essuie-glace du dispositif d'essuyage. Le déflecteur aérodynamique 19 est aussi désigné par le terme anglais « spoiler ». Le déflecteur aérodynamique 19 s'étend par exemple longitudinalement le long de l'armature 13 du balai d'essuie-glace 10. Le déflecteur aérodynamique 19 est conçu pour maintenir le balai d'essuie-glace 10 contre la surface extérieure de la vitre à essuyer notamment lors du déplacement à grande vitesse du véhicule automobile. En particulier, le déflecteur aérodynamique 19 est conçu pour maintenir le balai d'essuie-glace 10 plaqué contre la surface extérieure de la vitre à essuyer sous l'effet d'un flux d'air créé par le déplacement en marche avant du véhicule automobile.

Le déflecteur aérodynamique 19 s'étend ici sensiblement d'une extrémité à l'autre de l'armature 13 du balai d'essuie-glace 10. Le déflecteur aérodynamique 19 est conçu pour être agencé au niveau d'une partie supérieure du balai d'essuie-glace 10. En particulier, le déflecteur aérodynamique 19 est conçu pour recouvrir une partie supérieure du reste du balai d'essuie-glace 10. Autrement dit, le déflecteur aérodynamique 19 est conçu pour être assemblé à l'armature 13 du balai d'essuie-glace 10 de manière à recouvrir au moins une partie de l'extrémité supérieure de l'armature 13.

Le déflecteur aérodynamique 19 présente une face interne et une face externe. La face interne du déflecteur aérodynamique 19 est conçue, une fois le déflecteur aérodynamique 19 assemblé au reste du balai d'essuie-glace 10, pour faire face à, au moins en partie, voire pour être en contact avec l'armature 13. Autrement dit, la face interne du balai d'essuie-glace 10 est orientée vers le reste du balai d'essuie-glace 10. La face externe du déflecteur aérodynamique 19 est, elle, orientée vers l'extérieur du balai d'essuie-glace 10. La face externe du déflecteur aérodynamique 19 est opposée à la surface interne. Elle est destinée à être en contact avec le flux d'air créé par le déplacement du véhicule automobile.

### DEFLECTEUR DU BALAI D'ESSUIE-GLACE

Ici, l'élément piézo-électrique peut-être un film piézo-électrique 2 agencé sur le déflecteur aérodynamique 19 du balai d'essuie-glace 10. En particulier, le film piézo-électrique 2 peut être agencé sur la face externe du déflecteur aérodynamique 19 du balai d'essuie-glace 10.

On note qu'il est possible d'aménager l'élément piézo-électrique 2 à un balai d'essuie-glace, non illustré ici, muni de deux vertèbres.

Le film piézo-électrique est par exemple conçu pour participer à une alimentation en énergie électrique d'un module de comptage agencé sur le bras d'essuie-glace. L'alimentation en énergie électrique se fait alors directement ou indirectement, notamment par l'intermédiaire d'un dispositif d'accumulation d'énergie électrique.

En variante, l'élément piézo-électrique est conçu pour alimenter directement ou indirectement, notamment par l'intermédiaire d'un dispositif d'accumulation d'énergie électrique, le module de chauffage. Le module de chauffage est configuré par exemple pour permettre un dégivrage du dispositif d'essuyage.

### VITRE

Dans un mode de réalisation non illustré aux figures, l'équipement automobile est une vitre. L'élément piézo-électrique 2 est alors par exemple un film piézo-électrique 2 transparent ou sensiblement transparent. Cette caractéristique permet alors d'agencer le film piézo-électrique 2 sur la surface extérieure de la vitre à essuyer du véhicule automobile. La transparence du film piézo-électrique 2 permet ainsi de ne pas gêner la vision d'un utilisateur du véhicule automobile.

La vitre est par exemple munie d'un module de chauffage conçu pour permettre un dégivrage de la vitre. Le film piézo-électrique est alors conçu pour alimenter directement ou indirectement, notamment par l'intermédiaire d'un dispositif d'accumulation d'énergie électrique, le module de chauffage.

Le module de chauffage est par exemple un film chauffant lui aussi transparent et agencé sur la vitre.

### CAPTEUR OPTIQUE

En variante, dans un mode de réalisation non illustré aux figures, l'équipement automobile est un capteur optique équipant le véhicule automobile, comme exemple de capteur on peut citer une caméra dite de recul. L'élément piézo-électrique est ici un film piézo-électrique 2 transparent. Le film piézo-électrique est par exemple agencé sur le capteur optique. La transparence du film permet un agencement du film piézo-électrique 2 notamment directement sur un objectif de la caméra. La transparence du film piézo-électrique 2 permet alors de ne pas gêner ou perturber le fonctionnement de la caméra.

Le film piézo-électrique 2 est alors conçu pour participer à une alimentation en énergie électrique du capteur optique, notamment par l'intermédiaire d'un dispositif d'accumulation d'énergie électrique. En variante, le capteur optique est muni d'un module de chauffage conçu pour permettre un dégivrage du capteur optique. Le film piézo-électrique est alors conçu pour alimenter directement ou indirectement, notamment par l'intermédiaire d'un dispositif d'accumulation d'énergie électrique, le module de chauffage.

Ici, le module de chauffage est par exemple un film chauffant transparent agencé sur l'objectif de la caméra.

## Revendications

1. Ensemble pour véhicule automobile comprenant un équipement du véhicule automobile et un élément piézo-électrique (2), dans lequel l'élément piézo-électrique (2) est conçu pour alimenter en courant électrique l'équipement du véhicule automobile, l'ensemble étant **caractérisé en ce que** l'élément piézo-électrique est conçu pour se déformer sous l'effet d'un flux d'air de manière à produire un courant électrique utilisé pour le fonctionnement de l'équipement du véhicule automobile.

2. Ensemble selon la revendication précédente dans lequel l'élément piézo-électrique (2) est un film piézo-électrique (2).

3. Ensemble selon la revendication précédente dans lequel le film piézo-électrique (2) recouvre une partie d'une surface du véhicule automobile exposée à un flux d'air créé lors du déplacement du véhicule automobile.

4. Ensemble selon l'une quelconque des revendications précédentes comprenant en outre un module de chauffage (17) alimenté en courant électrique par l'élément piézo-électrique (2) et conçu pour dégivrer une partie au moins de l'équipement du véhicule automobile.

5. Ensemble selon la revendication précédente dans lequel le module de chauffage (17) est un film chauffant (17).

6. Ensemble selon l'une quelconque des revendications précédentes dans lequel l'équipement automobile est un module d'éclairage, un capteur optique, un dispositif d'essuyage ou une vitre.

7. Ensemble selon l'une quelconque des revendications précédentes comprenant en outre un dispositif d'accumulation d'énergie électrique, notamment un condensateur, un super-condensateur ou une batterie, conçu pour alimenter en courant électrique l'équipement du véhicule automobile, le dispositif d'accumulation d'énergie électrique étant conçu pour être alimenté en courant électrique par l'élément piézo-électrique (2).

8. Ensemble selon l'une quelconque des revendications précédentes comprenant en outre un déflecteur (19) aérodynamique qui déforme l'élément piézo-électrique (2) lorsque le déflecteur aérodynamique (19) est soumis au flux d'air.

9. Ensemble selon la revendication précédente dans lequel l'élément piézo-électrique (2) est un film piézo-électrique (2) collé sur le déflecteur aérodynamique (19).

## Patentansprüche

1. Einheit für ein Kraftfahrzeug, welche eine Einrichtung des Kraftfahrzeugs und ein piezoelektrisches Element (2) umfasst, wobei das piezoelektrische Element (2) dafür ausgebildet ist, die Einrichtung des Kraftfahrzeugs mit elektrischem Strom zu versorgen, wobei die Einheit **dadurch gekennzeichnet ist, dass** das piezoelektrische Element dafür ausgebildet ist, sich unter der Wirkung eines Luftstroms so zu verformen, dass ein elektrischer Strom erzeugt wird, der für den Betrieb der Einrichtung des Kraftfahrzeugs verwendet wird.

2. Einheit nach dem vorhergehenden Anspruch, wobei das piezoelektrische Element (2) eine piezoelektrische Folie (2) ist.

3. Einheit nach dem vorhergehenden Anspruch, wobei die piezoelektrische Folie (2) einen Teil einer Fläche des Kraftfahrzeugs bedeckt, die einem während der Fahrt des Kraftfahrzeugs erzeugten Luftstrom ausgesetzt ist.

4. Einheit nach einem der vorhergehenden Ansprüche, welche außerdem ein Heizmodul (17) umfasst, das von dem piezoelektrischen Element (2) mit Strom versorgt wird und dafür ausgebildet ist, wenigstens einen Teil der Einrichtung des Kraftfahrzeugs zu enteisen.

5. Einheit nach dem vorhergehenden Anspruch, wobei das Heizmodul (17) eine Heizfolie (17) ist.

6. Einheit nach einem der vorhergehenden Ansprüche, wobei die Einrichtung des Kraftfahrzeugs ein Beleuchtungsmodul, ein optischer Sensor, eine Wischvorrichtung oder eine Fensterscheibe ist.

7. Einheit nach einem der vorhergehenden Ansprüche, welche außerdem eine Vorrichtung zur Speicherung elektrischer Energie umfasst, insbesondere einen Kondensator, einen Superkondensator oder eine Batterie, die dafür ausgebildet ist, die Einrichtung des Kraftfahrzeugs mit elektrischem Strom zu versorgen, wobei die Vorrichtung zur Speicherung elektrischer Energie dafür ausgebildet ist, durch das piezoelektrische Element (2) mit Strom versorgt zu werden.

8. Einheit nach einem der vorhergehenden Ansprüche, welche außerdem einen aerodynamischen Windabweiser (19) umfasst, welcher das piezoelektrische Element (2) verformt, wenn der aerodynamische Windabweiser (19) dem Luftstrom ausgesetzt ist.

9. Einheit nach dem vorhergehenden Anspruch, wobei das piezoelektrische Element (2) eine piezoelektrische Folie (2) ist, die auf den aerodynamischen Windabweiser (19) geklebt ist.

## Claims

1. Assembly for a motor vehicle comprising an item of equipment of the motor vehicle and a piezoelectric element (2), wherein the piezoelectric element (2) is designed to supply the item of equipment of the motor vehicle with electric current, the assembly being **characterized in that** the piezoelectric element is designed to deform under the effect of an airflow so as to produce an electric current used for the operation of the item of equipment of the motor vehicle.

2. Assembly according to the preceding claim, wherein the piezoelectric element (2) is a piezoelectric film (2).

3. Assembly according to the preceding claim, wherein the piezoelectric film (2) covers a portion of a surface of the motor vehicle that is exposed to an airflow created as the motor vehicle moves.

4. Assembly according to any one of the preceding claims, further comprising a heating module (17) that is supplied with electric current by the piezoelectric element (2) and is designed to de-ice at least a portion of the item of equipment of the motor vehicle.

5. Assembly according to the preceding claim, wherein the heating module (17) is a heating film (17).

6. Assembly according to any one of the preceding claims, wherein the item of motor-vehicle equipment is a lighting module, an optical sensor, a wiping device or a window.

7. Assembly according to any one of the preceding claims, further comprising an electrical energy storage device, in particular a capacitor, a supercapacitor or a battery, that is designed to supply the item of equipment of the motor vehicle with electric current, the electrical energy storage device being designed so as to be supplied with electric current by the piezoelectric element (2).

8. Assembly according to any one of the preceding claims, further comprising an aerodynamic deflector (19) which deforms the piezoelectric element (2) when the aerodynamic deflector (19) is exposed to the airflow.

9. Assembly according to the preceding claim, wherein the piezoelectric element (2) is a piezoelectric film (2) bonded to the aerodynamic deflector (19).
